# EUROPÄISCHE PATENTANMELDUNG

(11) **EP 4 215 756 A1**
(43) Veröffentlichungstag der Anmeldung: **26.07.2023**
(21) Anmeldenummer: 22152349.1
(22) Anmeldetag: 20.01.2022
(51) Int. Cl.: F04D 27/02, F04D 29/10, F04D 29/12, F16J 15/34, F16J 15/40

(54) **ANLAGE UND VERFAHREN ZUM BETREIBEN EINER ANLAGE**

(71) Anmelder: Siemens Energy Global GmbH & Co. KG, 81739 München (DE)
(72) Erfinder: Kamp, Thorsten, 47269 Duisburg (DE); Konrad, Detlef, 47229 Duisburg (DE)

(57) **Zusammenfassung**

Die Erfindung betrifft eine Anlage (1) und ein Verfahren zum Betreiben einer Anlage (1), wobei die Anlage (1) eine Strömungsmaschine (2) mit einer Gasdichtung (3, 3a, 3b) umfasst, wobei die Gasdichtung (3, 3a, 3b) mit einem Gas, insbesondere Sperrgas, über eine Gasdichtungsversorgungsleitung (4, 4a, 4b) versorgt wird, wobei eine Analyseeinheit (6) verwendet wird, die dazu ausgebildet ist, einen physikalischen Wert des Gases zu ermitteln, das in die Gasdichtung (3, 3a, 3b) strömt.

## Beschreibung

Die Erfindung betrifft eine Anlage umfassend eine Strömungsmaschine mit einer Gasdichtung, wobei die Gasdichtung mit einer Gasdichtungsversorgungsleitung strömungstechnisch verbunden ist.

Des Weiteren betrifft die Erfindung ein Verfahren zum Betreiben einer Anlage wobei die Anlage eine Strömungsmaschine mit einer Gasdichtung umfasst, wobei die Gasdichtung mit einem Gas, insbesondere Sperrgas, über eine Gasdichtungsversorgungsleitung versorgt wird.

Gasdichtungen sind für Strömungsmaschinen, insbesondere Verdichter, die als Turbomaschinen ausgebildet sind, bei höheren Drücken in Folge der vergleichsweise geringen Leckage die bevorzugt eingesetzte Dichtung. Im Vergleich zu einer herkömmlichen Labyrinthdichtung ermöglicht die um eine Größenordnung niedrigere Leckage einer Trockengasdichtung einen signifikanten Wirkungsgradzuwachs der entsprechenden Turbomaschine.

Gegenüber den verhältnismäßig einfach aufgebauten Labyrinthdichtungen sind die modernen Trockengasdichtungen vergleichsweise anspruchsvoll hinsichtlich der Betriebsbedingungen. Ein sicherer Betrieb erfordert ein entsprechend aufbereitetes und gereinigtes Sperrgas. Weiterhin sind Trockengasdichtungen für einen sicheren Betrieb auf eine bestimmte Mindestdrehzahl angewiesen.

Bei den eingangs genannten Gasdichtungen stehen sich in der Regel ein rotierender Dichtring und ein stehender Dichtring an einer sich radial erstreckenden Dichtebene mit jeweils einer Dichtfläche an den Dichtringen gegenüber. Damit das Dichtprinzip erfolgreich umgesetzt werden kann, ist es erforderlich, dass die Dichtflächen der beiden Dichtringe präzise gearbeitet und zueinander ausgerichtet sind, so dass unter reproduzierbaren Betriebsbedingungen ein Gleitfilm des Dichtgases sich zwischen den Dichtflächen aufbaut und dementsprechend die Dichtungen berührungslos arbeiten können. Die hohen Präzisionsanforderungen unter sämtlichen denkbaren Betriebsbedingungen werden in der Regel nur mit einer besonderen Werkstoffauswahl erreicht. Der rotierende und der stehende Dichtring sind deswegen regelmäßig nicht einstückig mit dem Rotor bzw. Stator verbunden, wobei regelmäßig auch der stehende Dichtring elastisch gegen den rotierenden Dichtring verspannt ist. Der rotierende Dichtring ist an dem Rotor festgelegt, damit es nicht zu unkontrollierten Relativbewegungen insbesondere in axialer Richtung kommt. Bei herkömmlichen Dichtungsanordnungen kommt es häufig zu einem Fretting an der Axialanlage zwischen dem rotierenden Dichtring und einem entsprechenden Axialanlageabsatz des Rotors, da herkömmliche Anordnungen eine axiale Relativbewegung ermöglichen.

Die Erfindung hat es sich zur Aufgabe gemacht, eine Anlage und ein Verfahren anzugeben, mit der ein besserer Betrieb erzielt werden kann.

Die auf die Vorrichtung hin gerichtete Aufgabe wird durch den Patentanspruch 1 gelöst.

Demnach wird die Aufgabe gelöst durch eine Anlage umfassend eine Strömungsmaschine mit einer Gasdichtung, wobei die Gasdichtung mit einer Gasdichtungsversorgungsleitung strömungstechnisch verbunden ist, wobei eine Analyseeinheit vorgesehen ist, die dazu ausgebildet ist, einen physikalischen Wert des Gases zu ermitteln, das in die Gasdichtung strömt.

Die vom Patentanspruch 1 abhängigen und rückbezogenen Unteransprüche betreffen vorteilhafte Weiterbildungen der Erfindung.

Die auf das Verfahren hin gerichtete Aufgabe wird durch den Patentanspruch 9 gelöst.

Demnach wird die Aufgabe gelöst durch ein Verfahren zum Betreiben einer Anlage, wobei die Anlage eine Strömungsmaschine mit einer Gasdichtung umfasst, wobei die Gasdichtung mit einem Gas, insbesondere Sperrgas, über eine Gasdichtungsversorgungsleitung versorgt wird, wobei eine Analyseeinheit verwendet wird, die dazu ausgebildet ist, einen physikalischen Wert eines Gases zu ermitteln, das in die Gasdichtung strömt.

Die vom Patentanspruch 9 abhängigen und rückbezogenen Unteransprüche betreffen vorteilhafte Weiterbildungen der Erfindung.

Ein wesentliches Merkmal der Erfindung ist, dass das in die Gasdichtung einströmende Gas analysiert, wird mit einer Analyseinheit. Mit dieser Analyseeinheit wird ein physikalischer Wert des Gases ermittelt. Mit diesem physikalischen Wert wird sozusagen die Qualität des Gases ermittelt.

Mit der Kenntnis des physikalischen Wertes, wird Einfluss genommen auf den Betrieb der Anlage. Dazu wird eine Regelungseinheit eingesetzt, die als Parameter den physikalischen Wert erhält. Die Regelungseinheit wird dann dazu eingesetzt, um ein Ventil anzusteuern, dass in der Gasversorgungsanlage angeordnet ist.

Des Weiteren kann eine Heizeinheit in der Gasversorgungsanlage eingesetzt werden, mit dem das Gas beheizt werden kann. Die Heizeinheit wird über die Regelungseinheit angesteuert.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Gleiche Bauteile oder Bauteile mit gleicher Funktion sind dabei mit gleichen Bezugszeichen gekennzeichnet. Ausführungsbeispiele der Erfindung werden nachfolgend anhand der Zeichnungen beschrieben. Diese sollen die Ausführungsbeispiele nicht maßstäblich darstellen, vielmehr ist die Zeichnung, wo zur Erläuterung dienlich, in schematisierter und/oder leicht verzerrter Form ausgeführt. Im Hinblick auf Ergänzungen der in der Zeichnung unmittelbar erkennbaren Lehren wird auf den einschlägigen Stand der Technik verwiesen.

Es zeigen:

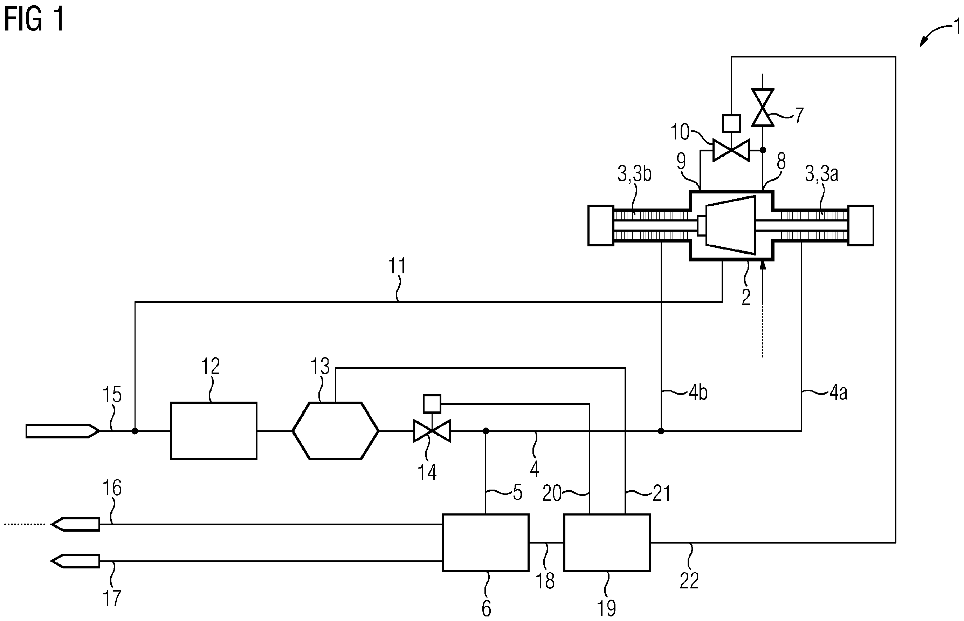

- Figur 1: Eine schematische Darstellung einer erfin-dungsgemäßen Anlage

Die Figur 1 zeigt eine Anlage 1. Die Anlage 1 umfasst eine Strömungsmaschine 2. Die Strömungsmaschine 2 kann ein Verdichter, ein Kompressor, eine Dampfturbine, ein Expander, ein mit superkritischem Kohlenstoffdioxid betriebener Expander oder eine Turbomaschine oder ähnliches sein.

Die Strömungsmaschine 2 weist im Wesentlichen einen drehbar gelagerten Rotor und ein um den Rotor angeordnetes Gehäuse auf. Des Weiteren weist die Strömungsmaschine 2 eine Gasdichtung 3 auf, wobei an den Enden der Strömungsmaschine jeweils eine Gasdichtung 3a und 3b angeordnet ist. Die Gasdichtung 3 ist als Trockengasdichtung ausgebildet und wird mit einem Gas, insbesondere Sperrgas, versorgt.

Die Gasdichtung 3 wird hierbei mit einer Gasdichtungsversorgungsleitung 4 strömungstechnisch verbunden. In dem in der Figur 1 gezeigten Ausführungsbeispiel zweigt die Gasdichtungsversorgungsleitung 4 in eine erste Gasdichtungsversorgungsleitung 4a und in eine zweite Gasdichtungsversorgungsleitung 4b auf, wobei die erste Gasdichtungsversorgungsleitung 4a mit der Gasdichtung 3a und die zweite Gasdichtungsversorgungsleitung 4b mit der zweiten Gasdichtung strömungstechnisch verbunden ist.

Ein Teil des Gases wird über eine Analyseleitung 5 abgezweigt und einer Analyseeinheit 6 zugeführt. Die Analyseeinheit 6 ist dazu ausgebildet, einen physikalischen Wert des Gases zu ermitteln, das in die Gasdichtung 3, 3a, 3b strömt.

In dem in der Figur 1 ausgewählten Ausführungsbeispiel wird in der Analyseeinheit 6 die Molmasse ermittelt.

Die Strömungsmaschine 1 wird über ein Prozessgasventil 7 mit Prozessgas beströmt. Dieses Prozessgas wird in einen Einströmbereich 8 der Strömungsmaschine 1 geströmt. Nach Durchströmung der Strömungsmaschine 1 mit dem Prozessgas strömt das Prozessgas über einen Ausströmbereich 9 aus der Strömungsmaschine 1 heraus. Der Einströmbereich 8 ist mit dem Ausströmbereich 9 über ein Verbindungsventil 10 strömungstechnisch miteinander verbunden.

Ein Teil des Prozessgases wird über eine Prozessgasleitung 11 abgezweigt und einer Aufbereitungsanlage 12 zugeführt. Die Aufbereitungsanlage 12 ist zum Aufbereiten des Gases ausgebildet, wobei ein Ausgang der Aufbereitungsanlage 12 strömungstechnisch mit der Gasdichtungsversorgungsleitung 4 verbunden ist.

In der Aufbereitungsanlage wird das Gas gefiltert, gereinigt und/oder entwässert.

In dem in Figur 1 gezeigten Ausführungsbeispiel kann über eine Versorgungsleitung 15 Gas in die Gasdichtungsversorgungsleitung 4 zugeführt werden.

Das über eine Ausströmleitung 16 aus der Anlayseeinheit 6 ausströmende Gas wird wieder der Strömungsmaschine 1 zugeführt, was in der Figur 1 durch die Pfeile und Punktdarstellung symbolisiert ist.

In einem Betriebsfall kann es vorkommen, dass ein Teil des aus der Analyseeinheit 6 ausströmende Gas direkt über eine Abblaseleitung 17 ausgeströmt und gegebenenfalls verbrannt wird.

Nach der Aufbereitungsanlage 12 strömt das Gas durch eine Heizeinheit 13, wobei die Heizeinheit 13 zum Beheizen des Gases ausgebildet ist. Die Heizeinheit 13 ist über die Regelungseinheit 19 regelbar ist.

Nach der Heizeinheit 13 strömt das Gas weiter durch ein Ventil 14 das in der Gasdichtungversorgungsleitung 4 angeordnet ist. Nach dem Ventil 14 strömt das Gas über die Gasdichtungsversorgungsleitung 4a und 4b jeweils zu der Gasdichtung 3a und 3b.

Der in der Analyseeinheit 6 ermittelte physikalische Wert wird über eine erste Datenleitung 18 einer Regelungseinheit 19 zugeführt.

Die Regelungseinheit 19 ist derart ausgebildet, dass der physikalische Wert, z.B. die Molmasse als Regelparameter verwendet wird und über eine erste Regelleitung 20 das Ventil 14 ansteuert. Über eine zweite Regelleitung 21 wird die Heizeinheit 13 geregelt.

In einer weiteren alternativen Ausführungsform wird eine dritte Regelleitung 22 mit dem Verbindungsventil 10 regelungstechnisch verbunden, wobei das Verbindungsventil 10 über die Regelungseinheit 19 geregelt wird.

## Patentansprüche

1. Anlage (1) umfassend
eine Strömungsmaschine (2) mit einer Gasdichtung (3, 3a, 3b),
wobei die Gasdichtung (3, 3a, 3b) mit einer Gasdichtungsversorgungsleitung (4, 4a, 4b) strömungstechnisch verbunden ist,
**gekennzeichnet durch**
eine Analyseeinheit (6), die dazu ausgebildet ist, einen physikalischen Wert eines Gases zu ermitteln, das in die Gasdichtung (3, 3a, 3b) strömt.

2. Anlage (1) nach Anspruch 1,
wobei die Strömungsmaschine (2) als Verdichter ausgebildet ist, wobei der Verdichter zum Verdichten eines Prozessgases ausgebildet ist.

3. Anlage (1) nach Anspruch 1 oder 2,
wobei die Analyseeinheit (6) zum Ermitteln der Molmasse des Gases ausgebildet ist.

4. Anlage (1) nach Anspruch 1, 2 oder 3,
mit einer Prozessgasleitung (11), die strömungstechnisch mit der Strömungsmaschine (2) verbunden ist, wobei die Prozessgasleitung (11) derart ausgebildet ist, dass ein Teil des Prozessgases durch die Prozessgasleitung (11) strömbar ist,
wobei in der Prozessgasleitung (11) eine Aufbereitungsanlage (12) angeordnet ist, die zum Aufbereiten des Gases ausgebildet ist,
wobei ein Ausgang der Aufbereitungsanlage (12) strömungstechnisch mit der Gasdichtungsversorgungsleitung (4, 4a, 4b) verbunden ist.

5. Anlage (1) nach Anspruch 4,
wobei in der Aufbereitungsanlage (12) das Gas gefiltert, gereinigt und/oder entwässert wird.

6. Anlage (1) nach einem der vorhergehenden Ansprüche, mit einer Regelungseinheit (19), die ein Ventil (14) in der Gasversorgungsleitung (4, 4a, 4b) regelt, wobei der in der Analyseeinheit (6) ermittelte physikalische Wert bei der Regelung des Ventils (14) berücksichtigt ist.

7. Anlage (1) nach einem der vorhergehenden Ansprüche, wobei in der Gasversorgungsleitung (4, 4a, 4b) eine Heizeinheit (13) zum Beheizen des Gases ausgebildet ist, wobei die Heizeinheit (13) über die Regelungseinheit (19) regelbar ist.

8. Anlage (1) nach einem der vorhergehenden Ansprüche, wobei die Strömungsmaschine (2) regelungstechnisch mit der Regelungseinheit (19) gekoppelt ist.

9. Verfahren zum Betreiben einer Anlage (1),
wobei die Anlage (1) eine Strömungsmaschine (2) mit einer Gasdichtung (3, 3a, 3b) umfasst, wobei die Gasdichtung (3, 3a, 3b) mit einem Gas, insbesondere Sperrgas, über eine Gasdichtungsversorgungsleitung (4, 4a, 4b) versorgt wird, wobei eine Analyseeinheit (6) verwendet wird, die dazu ausgebildet ist, einen physikalischen Wert des Gases zu ermitteln, das in die Gasdichtung (3, 3a, 3b) strömt.

10. Verfahren nach Anspruch 9,
wobei die Strömungsmaschine (2) mit einem Prozessgas durchströmt wird, wobei ein Teil des Prozessgases aus der Strömungsmaschine (2) ausgeleitet wird und durch eine Aufbereitungsanlage (12) strömt, wobei in der Aufbereitungsanlage (12) das Prozessgas gefiltert, gereinigt und/oder entwässert wird.

11. Verfahren nach Anspruch 9 oder 10,
wobei das nach der Aufbereitungsanlage (12) ausströmende Gas wieder der Gasdichtung (3, 3a, 3b) zugeführt wird, wobei ein Teil des Gases zur Analyseeinheit (6) geleitet wird.

12. Verfahren nach einem der Ansprüche 9 bis 11,
wobei die Analyseeinheit (6) mit einer Regelungseinheit (19) verbunden wird, wobei in der Regelungseinheit (19) der physikalische Wert des Gases berücksichtigt wird.

13. Verfahren nach einem der Ansprüche 9 bis 12,
wobei die Regelungseinheit (19) ein Ventil (14) regelt, das in der Gasdichtungversorgungsleitung (4, 4a, 4b) angeordnet wird.

14. Verfahren nach einem der Ansprüche 9 bis 13,
wobei die Temperatur des Gases mit einer Heizeinheit (13) geändert wird, wobei die Heizeinheit (13) über die Regelungseinheit (19) geregelt wird.

15. Verfahren nach einem der Ansprüche 9 bis 14,
wobei die Regelungseinheit (19) einen Strömungsfluss des Prozessgases durch die Strömungsmaschine (2) regelt.

16. Verfahren zum einem der Ansprüche 9 bis 15,
wobei die Strömungsmaschine (2) als Verdichter ausgebildet wird.
